# EUROPEAN PATENT SPECIFICATION

(11) **EP 3 423 206 B1**
(45) Date of publication and mention of the grant of the patent: **08.01.2020**
(21) Application number: 17718401.7
(22) Date of filing: 28.02.2017
(51) Int. Cl.: B21D 43/00, B21D 43/28, B65G 47/08

(54) **METHOD AND APPARATUS FOR AUTOMATICALLY FEEDING ELEMENTS OF ELONGATED SHAPE**
VERFAHREN UND VORRICHTUNG ZUM AUTOMATISCHEN ZUFÜHREN VON LÄNGLICHEN GEGENSTÄNDEN
PROCÉDÉ ET APPAREIL POUR L'ALIMENTATION AUTOMATIQUE D'ÉLÉMENTS DE FORME ALLONGÉE

(30) Priority: 29.02.2016 IT UB20161172
(43) Date of publication of application: 09.01.2019
(73) Proprietor: Schnell S.p.A., 61036 Colli al Metauro PU (IT)
(72) Inventor: RUPOLI, Simone, 61036 Colli al Metauro (PU) (IT)
(74) Representative: Manzella & Associati
(86) International application number: PCT/IB2017/051167
(87) International publication number: WO 2017/149452

(56) References cited:
- EP-A2- 1 356 875
- EP-A2- 1 356 876
- EP-B1- 1 996 348
- WO-A2-2014/136067

## Description

### Technical Field

The present invention concerns a method and an apparatus for automatically feeding elements of elongated shape, in particular bar-shaped metal profiles according to the preamble of claim 1 and 7 respectively.

### Background Art

It has been known the use of apparatuses for automatically loading elements of elongated shape, in particular bars, from a respective store, generally constituted by a plurality of compartments placed on the floor, inside which the bars are prepared, according to size and type.

The above-mentioned apparatuses are equipped with picking means, for example of the magnetic type, to pick groups of bars from respective compartments, as well as a transfer device, for loading the picked bars, associated with counting and transfer means for transferring a determined number of bars to suitable receiving means. More precisely, the receiving means are destined to receive the counted bars and to transfer them to subsequent work stations, for example cut and/or fold stations.

An example of these apparatuses is disclosed in EP1356875 in the name of the same Applicant on which for example the preambles of the the independent claims is based. In particular, the apparatus disclosed in this patent comprises a transfer device arranged above a collecting store, comprising a body shaping a shelf, tiltable between a substantially horizontal position and a lowered position, substantially vertical, predisposed to free the passage of the bars during the load and unload thereof.

The body of the transfer device, in particular, shapes a screw member, provided with a helical recess on the lateral surface, intended for receiving the bars to be counted and, after the rotation of the body about its longitudinal axis, to separate and transfer them transversally with respect to the longitudinal extension of the same bars.

The known apparatuses are generally used to load, in a controlled manner, bars of very different transverse size, usually comprised between 8mm and at least 55mm of diameter. Given the wide variety and diversity of products to be loaded and transferred, the loading device used in such apparatuses is not always able to load the bars in an efficient way.

More precisely, if the helical recess of the screw member is shaped according to the bars of bigger transverse size, it can have an excessive width to receive and hold the bars of smaller transverse size, provided in the use interval of the apparatus. Vice versa, if the helical recess of the screw member is shaped according to bars next in size to the minimum ones, the loading device can have an inadequate width to receive and hold the bars of bigger transverse size, provided in the interval of use of the apparatus.

Moreover, when the bars are supported by the transfer device, a preferably median portion of the axis of the bars is arranged in support on the screw member. In particular, the supported portion of each loaded bar is housed inside a respective groove of the helical recess. The remaining portions, embossed, are subjected to flexion, according to the weight and thus to the size. As a result, the inflexion can be more accentuated in bars with smaller transverse size. In such case, the end portions remain in support in the store, exerting a contrast action, because of the friction, against the rotation of the screw member. However, such contrast action is useful as it eases the transfer of the bars along the transverse direction to the respective longitudinal extension.

Conversely, with longitudinal bars with bigger transverse size, the degree of inflection is less evident and, hence, the end portions of the loaded bars can remain raised from the store. In absence of the cited contrast forces, the rotation of the screw member can cause the thrust of the bars in direction tangent to the support on the helical grooves of the recess, generating undesired and uncontrolled longitudinal movements to the same bars. At the same cross section, the phenomenon is all the more accentuated the smaller the longitudinal extension of the bars.

Therefore, the apparatuses of the known type are usually perfected to correctly work with bars of transverse direction or longitudinal extension inside a reduced range with respect to the size or longitudinal extension actually available on the marked. Such adjustment inevitably shows its limits when the apparatus is used to feed bars of different transverse size, in particular close to the maximum size permitted by the transfer member.

### Disclosure

The task of the present invention is that of solving the aforementioned problems, devising a method and an apparatus for automatically feeding elements of elongated shape, in particular bar-shaped metal profiles, that allows to perform the feeding step in an efficient way in any working condition.

Within such task, it is a further scope of the present invention to provide an apparatus of simple constructive and functional conception, provided with a sure and reliable use as well as relatively economic cost.

The cited scopes are reached according to the present invention by the method for automatically feeding elements of elongated shape according to claim 1 and by the apparatus according to claim 7.

The method according to the invention provides to prearrange a transfer device at a store in which the elements of elongated shape to be fed are placed, the transfer device shaping a transfer plane on which the elements can be supported.

A plurality, of indefinite number of elements, is picked by a prearranged picking unit, and arranged in support on the cited transfer plane prepared in a substantially horizontal support position.

A feature of the invention is to operate, a counting member associated with the transfer plane along a direction substantially transversal to the supported elements, in relative manner with respect to the above-mentioned plurality of supported elements. In this way, the counting member, preferably mobile with respect to the stopped elements in support or substantially stopped, works in a counting stroke, reading, at passage, the presence of elements on the plane or, though, the presence of a determined number of elements.

Then a transfer member, prepared in a disengagement position, is operated in the same direction transverse to the supported elements.

Preferably, the movement of the counting member occurs simultaneously with the movement of the transfer member.

The transfer device is stopped and operated in an engagement position of the elements, at the determined number of elements counted by the counting member in the counting stroke.

Finally, the operated transfer member is handled in a transfer stroke, back along the same transverse direction, thus transferring the determined number of elements along the transfer plane of the transfer device.

According to a preferred embodiment of the invention, the counting member and the transfer member are mobile integrally along the above-mentioned transverse direction.

According to a further preferred embodiment of the invention, the counting member is preferably of optical type and is predisposed to detect the alternation of filled spaces and empty spaces along the above-mentioned counting stroke.

When, on the transfer plane, more elements are close, the number of alternations detected by the counting member, between filled and empty spaces, could not coincide with the effective number of elements met in the above-mentioned counting stroke. In such case, according to a preferred embodiment of the invention, the courting member can overtake in the counting stroke the determined number of elements to be fed, the above-mentioned determined number being interposed between approached elements, thus in absence of an empty space detectable between them.

The counting member then processes the measurement of the portion instantly travelled between two empty subsequent spaces, compares such measurement with the transverse size of the elements to be counted and calculates the figure of the overtaking. The transfer member can, then, be handled along a back-stroke, according to the calculated figure, and place at the determined number of elements to be fed.

A feature of the apparatus according to the invention, predisposed to carry out the above-mentioned method, consists in the fact of comprising a transfer device shaping a transfer body, preferably a shelf, predisposed to receive a plurality of elements from a picking unit. The transfer device defines a transfer plane for supporting and transferring the same elements.

The transfer device is associated with a mobile counting member along a transverse direction relatively to the longitudinal extension of the above-mentioned elements, for counting at least a determined number of the supported elements, in a counting stroke in relative motion with respect to the above-mentioned elements to be fed-

The device comprises as well a transfer member mobile along the above-mentioned transverse direction, operable from a disengagement position, at which it does not interfere with the elements supported by the transfer plane, to an engagement position, to move the determined number of elements, counted by the counting member, on the transfer plane.

According to a preferred embodiment of the apparatus of the invention, the counting member is carried mobile by a carriage sliding in the transverse direction along guides that extend for a useful extension, of support of the above-mentioned transfer device.

To ensure that the elements to be counted are levelled on a single line, in support on the transfer plane, the transfer device can cooperate with the picking unit, predisposed to perform such "flattening" function.

In practice, the picking unit can operate, in a direction perpendicular to the above-mentioned transfer plane, a respective abutment portion, predisposed to force the elements to level on a row or layer, thus ensuring a correct counting by the counting member.

According to a preferred embodiment of the apparatus of the invention, the above-mentioned shelf-shaped transfer body can cooperate with an additional transfer body, for example realized by a screw member. The screw member is preferably mounted rotatable on a shaft predisposed to be operated in rotation by a respective motor member, to transfer the elements into the above-mentioned transverse direction.

On the screw member, the elements can be transferred and separated, being counted for example by an auxiliary counting member, preferably fixed.

In this case, the shelf-shaped transfer body can be mounted mobile, for example tilting or translating, between an active position, in use substantially horizontal, of support of the elements to be fed, and an inactive position, spaced from the previous one, for example lower, to operate the auxiliary transfer body, preferably fixed on the same framework.

### Description of Drawings

Details of the invention shall be more apparent from the detailed description of a preferred embodiment of the apparatus predisposed to carry out the method for automatically feeding elements of elongated shape, illustrated for indicative purposes in the attached drawings, wherein:
figures 1, 2, 3, 4, 4a and 5 show a side view of the apparatus according to a preferred embodiment of the invention in subsequent loading steps of the elements to be fed;
figure 6 shows a perspective view of the transfer device used in the same apparatus;
figures 7, 8, 9, 10, 11 and 12 respectively show a side view of the same transfer device in subsequent working steps of counting and discharge of the elements to be fed;
figure 11a shows a magnified view of a detail taken from figure 11;
figures 13, 14, 15, 16, 17, 18, 19, 20 and 21 respectively show a side view of the same transfer device in subsequent working steps of counting and discharge, according to a working mode different with respect to what has been illustrated in figures 7 to 12;
figure 15a shows a magnified view of a detail taken form figure 15, from an opposite angle;
figure 22 shows a front view of the transfer device, according to a different embodiment, in a support step of different elements to be fed;
figure 23 shows a detail of the transfer device shown in figure 22;
figure 24 and 25 show a side view, from opposite points of view, of a detail of the transfer device shown in figure 22, in a working condition;
figures 26 and 27 show a side view, from opposite points of view, of the same device shown in figure 22, in a different working condition;
figures 28 and 29 show a perspective view of the transfer device shown in figure 22 in the working conditions shown in figures 24, 25, 26 and 27 respectively.

### Best Mode

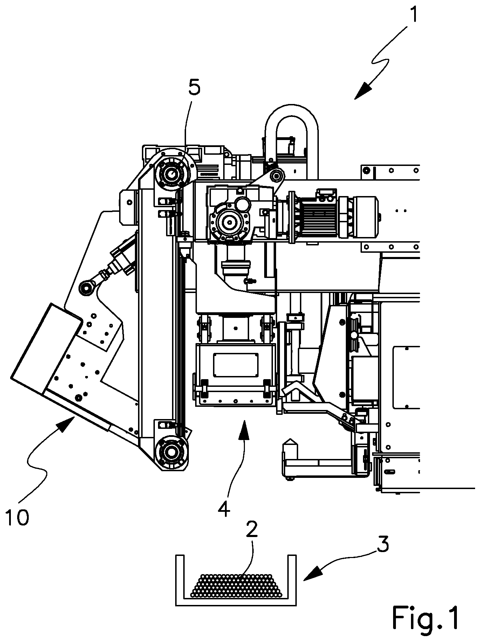

With particular reference to figures 1 to 5, the apparatus according to a preferred embodiment of the invention for automatically feeding elements 2 of elongated shape, in particular bar-shaped metal profiles is indicated with 1.

Obviously, the apparatus 1 is predisposed to feed any element of elongated shape, also different from metal profiles.

The apparatus 1 comprises a transfer device 10 intended for receiving one or more elements 2, picked from a store 3, and transferring them transversely to subsequent working stations.

The transfer device 10 can be fed by a picking unit 4, comprising for example a magnetic, electromagnetic or pliers member, predisposed to pick one or more elements 2, preferably a plurality according to a number generally not known in advance of elements 2, from the store 3 and deliver them to the transfer device 10. The store 3 of elements 2 can comprise one or more compartments, preferably a series of compartments, in which the elements 2 are prearranged, preferably divided according to the transverse and/or longitudinal size as well as, for example, the material and the shape.

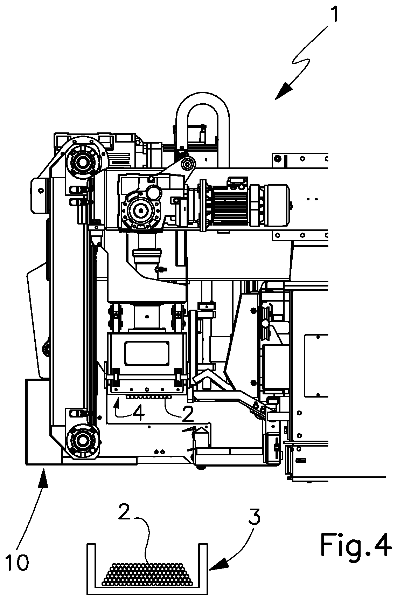

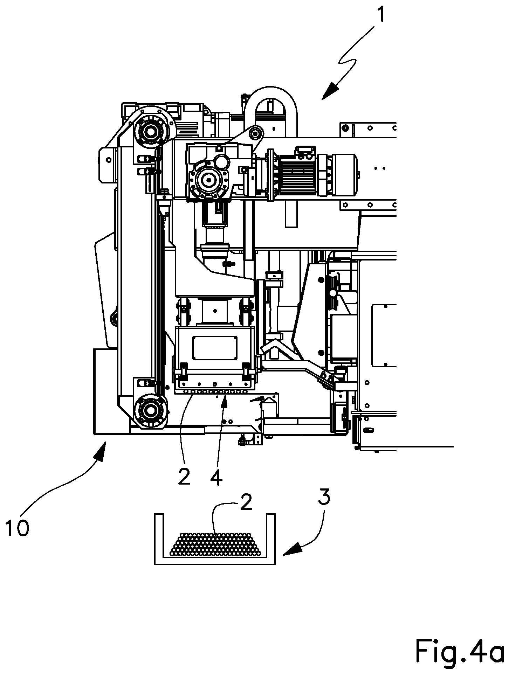

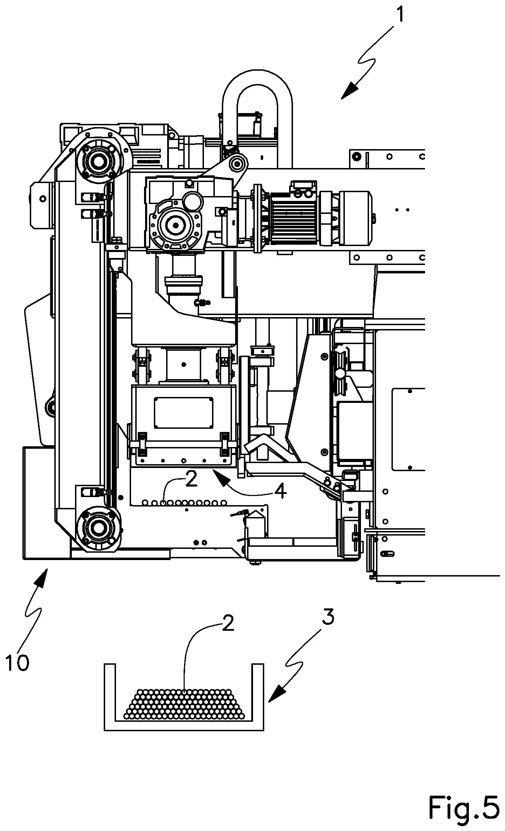

The transfer device 10 is preferably mobile, in known manner, between a working position of support of the picked elements 2 (see figures 4 and 5) and a rest position, in which the same device is spaced from the picking unit 4 to free a space in which the picking unit 4 can perform the movement, of loading or unloading, of the elements 2 from the store 3 (see figures 1, 2 and 3). Moreover, since the store 3, in particular a deposit, in the case of bars, is preferably in a position below the picking unit 4, the elements 2 can be moved by the above-mentioned picking unit 4 according to a substantially rectilinear lifting or, in case, lowering path, thus of minimal extension. In any case, the picking unit 4 is mobile according to any picking path, provided that this is suitable for the scope.

The picking unit 4 can alternatively follow a specific path defined depending on the physical size and shape of the mechanical structure on which it is applied.

The transfer device 10 can be for example tiltable about a tilting pin 5, or mobile with translating motion or according to a combination of motions of different type, between the working position and the above-mentioned rest position.

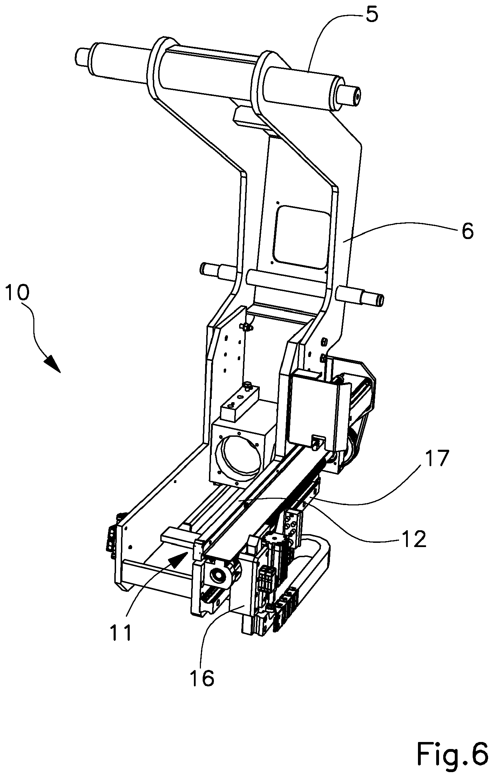

The transfer device 10 provides a transfer body 11 shaping for example at least one shelf or an arm, that defines a transfer plane 12 of the elements 2 (see in particular figure 6). The shelf 11 is mounted on a framework 6.

The shelf 11 preferably shapes an end protrusion 13, intended for acting as safety stop for preventing the elements 2, supported on the transfer plane 12, to accidentally fall. Therefore, the protrusion 13 represents a sort of safety step, emerging with respect to the transfer plane 12.

The transfer device 10 is preferably associated with a leveller or controller, intended to spread the elements 2 in support on the transfer plane 12 on a single row or layer. The leveller thus eases the correct counting of the elements 2 on the transfer plane 12, as it is described in more detail below, preventing undesired overlaps of the elements 2 that could generate counting mistakes. This functions can be preferably performed by the same picking unit 4, preferably though a respective abutment portion (see figure 4a)

The transfer device 10 comprises also a counting member 14 for counting, at least partially, the elements 2 supported by the transfer plane 12 and a transfer member 15 for separating and transversely moving the elements 2, in a determined number or remaining in the plane 12 after a counting and downloading stroke, as described in the following.

The counting member 14 and the transfer member 15 are associated with the shelf 11, in particular they can be mounted on the framework 6.

More precisely, the counting member 14 is carried mobile by the framework 6, relatively to the shelf 11, to count the elements 2 supported by the transfer plane 12.

The counting member 14 is preferably carried mobile substantially along the whole longitudinal extension of the shelf 11 predisposed to transversely support the elements 2 or at least along a part of such extension, useful for transversely supporting the elements 2.

The counting member 14 is mobile relatively to a direction that, in use, is transverse to the longitudinal extension of the elements 2.

In particular, the counting member 14 is preferably carried by a carriage 16 sliding along guides 17 mounted on the framework 6, parallel to the above mentioned transverse direction.

The counting member 14 comprises sensor means, preferably of the photocell type or of other type, provided that they are predisposed to detect the presence of elements 2 on the transfer plane 12, and allowing their passage.

The counting member 14 is preferably, but not limitedly, of optical type, thus able to detect the presence of elements 2, being mobile relatively to a row of the same elements 2 spread on the transfer plane 12. In particular, the counting member 14 is able to read the alternation between the presence and absence of the above-mentioned elements 2, sliding in the above-mentioned transverse direction, along the useful extension of the transfer plane 12.

The counting member 14 is usefully associated with measuring means of the portion instantly travelled by the carriage 16 in the counting step, in this way it is able to detect not only the presence of the bars, but also their size and position. Such detection can be usefully employed in combination with the optical reading of the presence of the elements 2, starting from knowing the size of the elements 2 to be fed. As a matter of facts, the measurement of the portion instantly travelled is useful to correctly count the number of elements 2 resting on the transfer plane 12, when the same elements 2 are approached one another and then the mutual closeness would prevent the optical means to distinguish between an element 2 and an adjacent element 2.

The transfer member 15 is as well carried mobile by the framework 6, relatively to the shelf 11, to transfer along a transverse direction, in a selective way, the elements 2 supported by the transfer plane 12. More precisely, the transfer member 15 has the function of separating or selectively engage the whole or a part of the elements 2 supported by the shelf 11 and also, possibly, the function of transversely push the same engaged elements 2, so as to move them in controlled manner on the transfer plane 12.

The thrust exerted by the transfer member 15 can then cause the sliding of the engaged elements 2 on the transfer plane 12 for downloading them from the plane 12, in case, overtaking the safety protrusion 13, or for moving them inside it.

The transfer member 15 preferably shapes a blade-shaped or finger-shaped body, predisposed to act as a separation, inserting with its longitudinal extension between the elements 2 supported by the transfer plane 12. Preferably, as a matter of facts, the transfer member 15 shapes a separation portion, for example a wedge-shaped end, to ease the insertion between the elements 2 and, therefore, the separation between elements 2 to engage and the elements remaining on the transfer plane 12.

The transfer member 15 and the counting member 14 are preferably mobile in fixed manner, in particular along the same guides 17 and/or through the same operation means, i.e. the carriage 16. As an alternative, the counting member 14 and the transfer member 15 can be mobile in independent manner, each being associated by suitable operation means and/or on autonomous guide means.

To perform the cited insertion between the elements 2, the transfer member 15 is mobile also with an actuation motion, between an actuation engaged position, at which the blade interferes with the transfer plane 12 and an inactive disengagement position at which the blade is spaced from the above-mentioned plane, not interfering with it and then with the elements 2 supported on it.

In particular, the blade 15 can be mobile alternatively between a position emerged with respect to the transfer plane 12 and a position hidden with respect to the same plane 12, for example below the same plane.

Preferably, the transfer plane 15 is carried by the carriage 16 sliding along the guide 17 mounted on the framework 6.

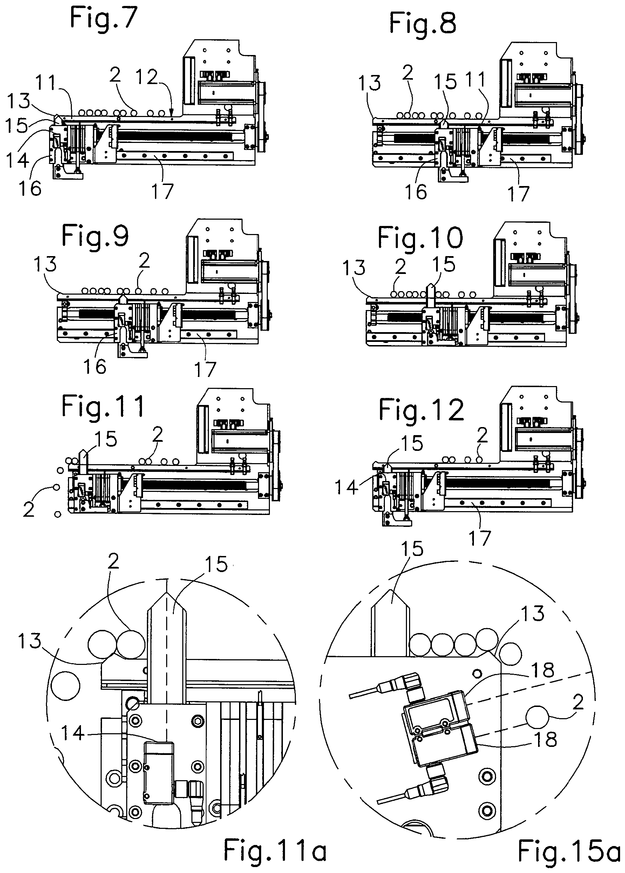

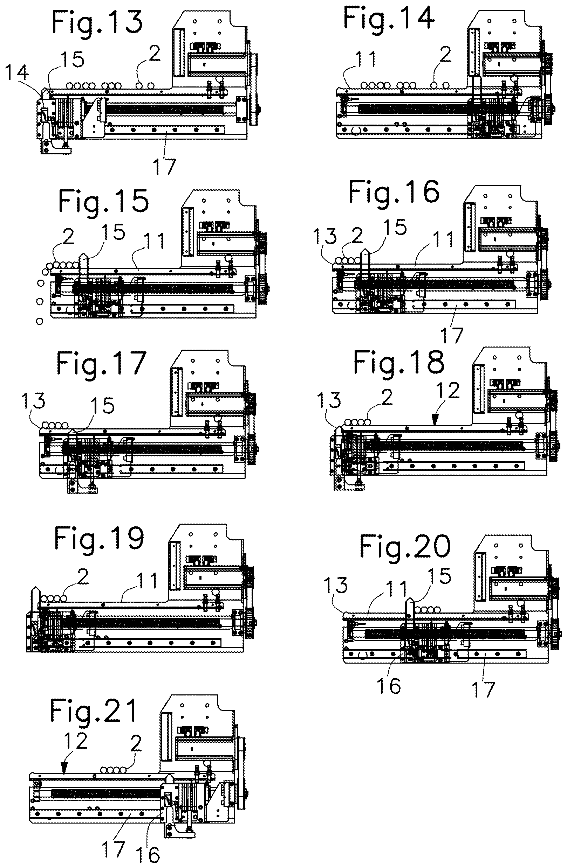

The transfer device 10 can further comprise an auxiliary counting member 18 arranged in an end portion of the useful extension of the shelf 11, next to the unloading end of the elements 2, in particular, to the protrusion 13. The auxiliary counting member 18 is preferably arranged in a fixed manner in such position near the unloading end, so as to detect, for example through optical or electro mechanic or mechanic means, each element 2 unloaded by the controlled handling of the transfer member 15. The auxiliary counting member 18 can act as further safety counting member in addition to the counting member 14, mobile on the carriage 16 (see figure 15a).

Moreover, the counting member 14 and/or the auxiliary counting member 18 can comprise also detection means, facing or transversely aligned, so as to ensure an efficient counting also in case of breakdown of one of the detection components (such redundancy is visible, for example, in figure 15a).

The functioning of the apparatus for automatically feeding elements of elongated shape according to the invention is easy to understand from the preceding description.

In a starting preparation step, the transfer device 10 is prearranged in the cited rest position, in which it does not interfere with the picking or unloading operations of the picking unit 4, which can take place directly above the store 3 in which a plurality of elements 2 is arranged (see figure 1), for example in heaps.

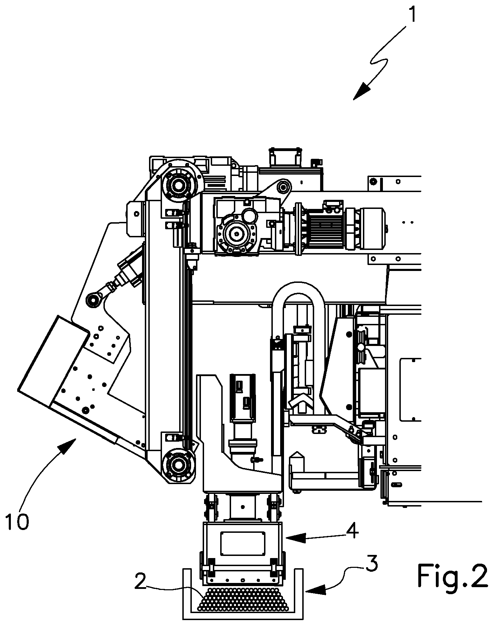

Subsequently, the picking unit 4, for example of magnetic type, lowers on the elements placed in the store 3, engaging a least the one arranged at the top of the heaps (see figure 2).

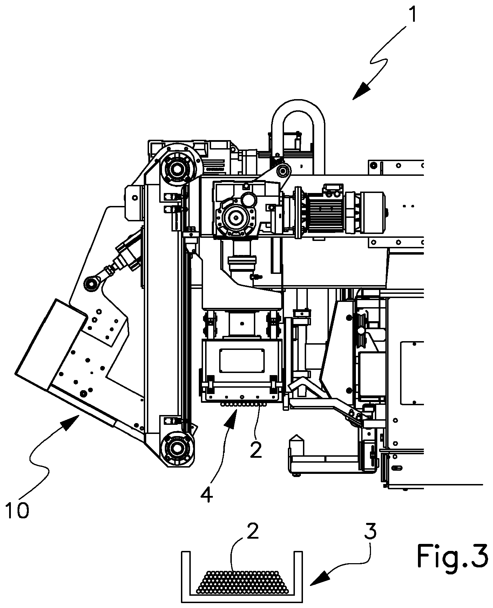

The picking unit 4 then handles the engaged elements 2, for example lifting them through a substantially rectilinear path (see figure 3), until a lifted position, at which the transfer device 10 can be operated, to receive these elements 2.

In the subsequent step, the transfer device 10 moves into the cited working position, in particular arranging with the transfer body 11 below the elements 2 held by the picking unit 4 in lifted position (see figure 4).

The picking unit 4 is handled, in particular lowered, to release the picked elements 2, in support on the predisposed transfer plane 12 (see figure 5).

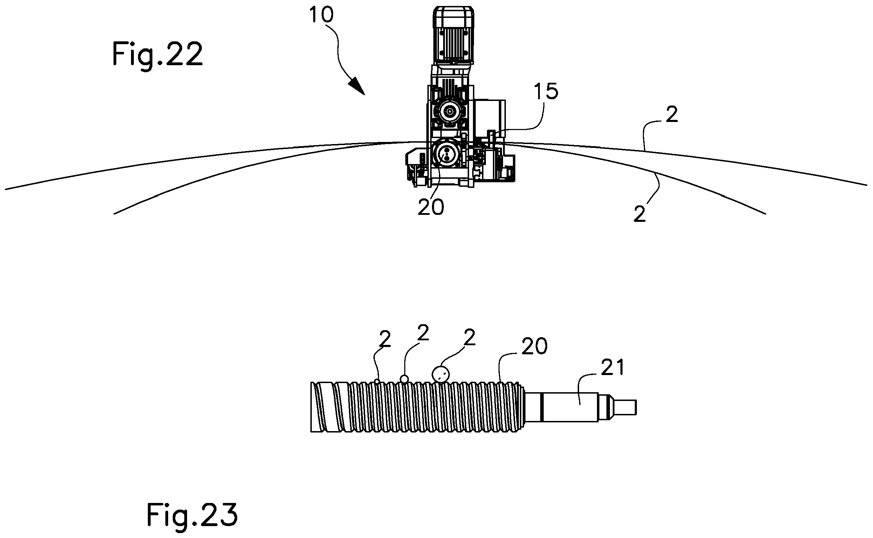

In this step, in particular, the elements 2 are in support at a portion, for example central, on the transfer plane 12. The elements 2, for example metal bars, can be subjected to flexion, in a way corresponding to the features of the material and to the geometry. The elements 2 in support arrange according to an inflex profile, presenting the opposite ends, free, more or less curved, according to the characteristic of the same elements 2, as it is shown in figure 22, described in detail in the following. Figure 22 is illustrative of such phenomenon, showing elements 2, different in length and/or transverse size, in support on the transfer body 11, considering that, usually, elements 2 of the same type are handled on the transfer body 11 in the same working cycle.

According to a first working mode, shown in figures 7 to 12 it is subsequently possible to provide that the carriage 16 carrying the counting member 14 and the transfer member 15 is already prepared at the end closest to the discharge end of the useful extension of the body 11, or that, as an alternative, the carriage 16 is brought into such position from the opposite end.

Subsequently, the carriage 16 is handled along the guides 17, along a direction transverse to the supported elements 2, carrying the transfer member 15 in hidden position, so as not to interfere with the elements 2 supported on the transfer plane 12. The counting member 14 performs then a counting stroke for counting the supported elements 2 or at least of a part thereof.

More precisely, during such counting stroke, of movement of the carriage 16, the counting member 14 carried by the carriage 16 performs the counting of the elements 2 progressively met (see figure 8). The counting member 14 detects a succession of elements 2, distinguishing one from the other. To distinguish and thus correctly count each element 2 met in the above-mentioned counting stroke, the counting member 14 can measure as well the portion instantly travelled along the guides 17, taking into account, in combination, the transverse size of each element 2 to be fed, such value being settable in advance. In other words, in case a determined number of elements 2 being on the aligned succession of elements 2 on the transfer plane 12 should be counted, corresponding to a position interposed between two close elements 2, that are not optically distinguishable, it is useful that the counting member 14 can consider the measurement of the travelled path and the transverse size of each element 2, so as to detect the occurrence of a mutual closeness of two or more elements 2. Once having detected the occurrence of a closeness and once having overtaken the determined number of elements 2 to be fed, the carriage 16 stops and inverts the transfer motion, keeping the transfer member 15 in hidden position, so as not to interfere with the elements 2 on the plane. In particular, the counting member 14 performs a back stroke that serves to place the transfer member 15 in a position interposed between the elements 2, so as to separate the determined number of elements 2 being in the part of transfer plane 12 close to the download zone (see figure 9).

The carriage 16 is then stopped in a position, for example intermediate with respect to the useful extension of the transfer body 11, after having counted in a reliable manner the determined number of elements 2. The transfer member 15 is then operated in active position, inserting between the counted elements 2 and the remaining elements 2, in this case not fully counted yet. (see figure 10).

The carriage 16 is then handled in a transfer stroke in the same transverse direction, towards the end of the useful extension close to the unloading position, unloading the counted elements 2 one after the other, according to the thrust exerted by the transfer member 15 prearranged in active position (see figures 11 and 11a). During the transfer stroke, the counted elements 2 overtake one after the other, ordinately, the protrusion 13 and, possibly, are further counted by the auxiliary counting member 18.

At the end of the unloading step, the transfer member 15 is deactivated in the disengagement position below the transfer plane 12, in order not to interfere with the remaining elements 2, for a possible subsequent handling step (see figure 12).

Alternatively, the transfer device 10 can work according to a different cycle, shown in figures 13 to 21.

Differently from the previously described working cycle shown in figures 7 to 12, it is possible to provide to perform the counting of all the elements 2 received in support by the transfer body 11 (see figures 13 and 14), through the counting member 14 in the cited counting stroke, by handling the carriage 16 carrying the counting member 14 from one end to the other of the cited useful support extension, or however for a portion comprising all the supported elements 2. At the end of the counting stroke, the carriage 16 is then placed at the end opposite to the unloading end.

The transfer member 15 is then operated in the emerged position, so as to engage the end element 2 of the row or layer of elements 2 supported by the transfer member 11 (see also figure 14).

Subsequently, the transfer member 15 is handled along the transfer plane 12 in the cited transfer stroke, for example in direction opposite to the direction of the counting stroke, pushing the engaged elements 2 on the same plane in corresponding way. The thrust exerted by the transfer member 15 causes the unloading of the elements 2 from the transfer plane 12, gradually overcoming the protrusion 13 (see figure 15).

In the unloading step, the elements that overtake such protrusion 13 can be counted by the auxiliary counting member 18 (see figure 15a) or simply by the counting member 14, taking in to account the portion instantly travelled and the transverse size of the elements 2.

When a determined number of elements 2 has been downloaded, preferably counted by the auxiliary counting member 18, the transfer member 15 stops along the transfer plane 12 and comes back in the hidden disengagement position (see figure 17).

On the transfer plane 12 a number of elements 2 remains, for example destined to be transferred in a cutting station, the number being known from the difference with the determined number of the previously unloaded elements.

The transfer member 15 in hidden position, submerged for example with respect to the transfer plane 12, can then be handled to reach the unloading end of the transfer body 11, without interfering with the above mentioned remaining elements 2 (see figure 18).

To move the elements 2 the transfer member 15 is then brought again into the active position, engaging the edge element 2 of the row of elements 2 supported (see figure 19), and handled in transverse direction in a new transfer stroke towards the opposite end (see figure 20).

When the remaining elements 2 reach the desired position on the transfer plane 12, the transfer member 15 is stopped, brought into the hidden position and possibly brought back to an end of the useful extension of the transfer body, to start a new working cycle (see figure 21).

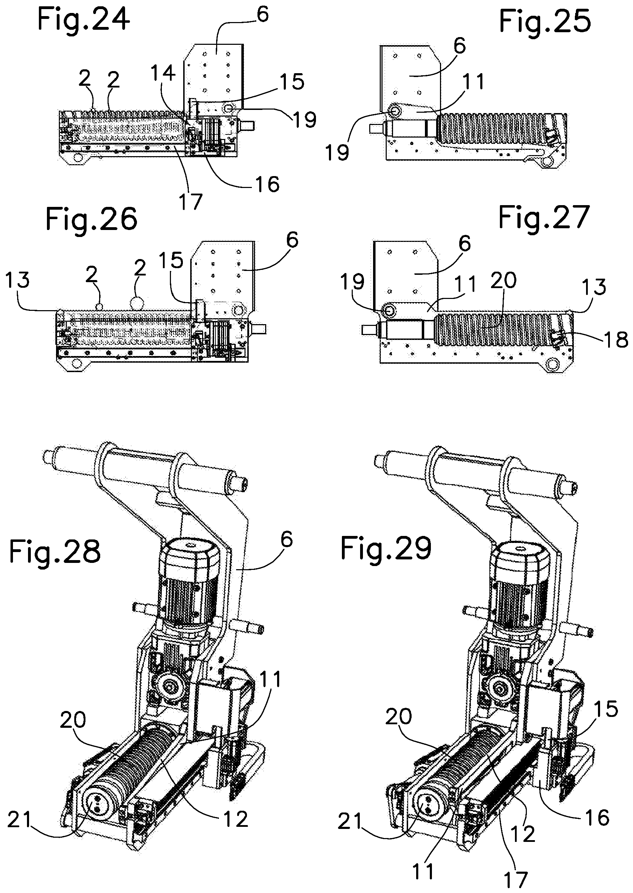

According to a particular further embodiment of the invention, shown in the figures 22 to 29, the shelf 11 can be also mobile alternately between an active position, at which it is arranged with the transfer plane 12 substantially horizontal, in a condition predisposed thus to receive in support the elements 2 picked by the picking unit 4 (see figure 29), and an inactive position, preferably foldaway, at which the shelf 11 is spaced from the above mentioned substantially horizontal position, for example rotated and/or translated (see figure 28).

The shelf 11 can be for example tiltable about a tilting pin 19, or subjected to another type of motion, for example an alternated translation motion, in particular lifting and lowering, to emerge and be hidden with respect to receiving plane of the elements 2.

According to such particular embodiment, the shelf-like transfer body 11 cooperates with the additional transfer body 20 for example made up of a screw member. The screw member 20 is mounted rotatable on a shaft 21 predisposed to be operated in rotation by a respective motor member.

Counting means of the elements 2, for example of the type comprising a microswitch or an optical sensor photocell, mechanic means, laser or the like, cooperate with the screw member 20. Such counting means can be of fixed type, for example coinciding with the auxiliary counting member 18 previously cited, arranged below the elements 2 in support or above them, on the framework 6.

The screw member 20 shapes a helical recess, that extends on the peripheral surface of the same member, along the extension of the shaft 21, to collect, separate and feed the elements 2 picked by the picking unit 4, further to the rotation fixed to the same shaft 21.

In practice, the helical recess of the screw member 20 has on the above-mentioned receiving horizontal plane, a succession of grooves predisposed to receive single elements 2.

The rotation of the shaft 21 then produces the rotation of the helical recess and, as a consequence, the progressive feeding of each element 2 received in the respective groove, in direction transverse to the longitudinal extension of each element 2, in support.

The helical recess of the screw member 20 can further have a differentiated pitch, preferably increasing towards the unload edge of the transfer body 20, so as to progressively space the elements 2 singularly received on each groove. The progressive spacing of the elements 2 eases the counting and the correct transferring.

In practice, hence, the transfer body 11 and the additional transfer body 20 can be mobile relatively one another to make operative one or the other according to the exigencies, for example, according to the transverse size of the elements 2 to be transferred, more fitted to one or the other system. For example, it is possible to see in figures 24 and 26, in particular, that elements 2 of transverse size greater than a certain value can be more efficiently transferred through the shelf 11, while elements 2 of smaller diameter can be easily housed on the helical recess of the screw member 20 and thus transferred by it.

Preferably, the additional transfer body 20 is mounted fixed to the framework 6, while the shelf body 11 is mobile, as it was previously described, alternatively, between the cited active position, emerged with respect to the additional transfer body 20, and the cited inactive position.

The functioning of the above-mentioned embodiment is absolutely similar to that previously described.

However, it is important to consider that in the cited starting step it is possible to operate selectively the transfer body 11 or the additional transfer body 20, according, for example, to the transverse and/or longitudinal size of the elements to be fed. In particular, it is possible to provide the operation of the transfer body or, alternatively, the deactivation of this, so as to make active the additional transfer body 20, for receiving and transferring the elements 2.

In case of activation of the additional transfer body 20, shaped by the screw member, it is possible to perform the transfer of the elements 2 according to the determined number, performing the axial rotation of the shaft 21 and taking into account the number of elements 2 unloaded progressively, through the additional counting member 18.

In the subsequent step, then, the transfer device 10 moves into the cited working position, in particular arranging with the transfer body 11, or, in case, the additional transfer body 20, below the elements 2 held by the picking unit 4 in lifted position (see figure 6).

In practice, the used materials as well as the size and shape may vary according to the needs.

Should the technical characteristics mentioned in the claims be followed by reference signs, such reference signs were included for the sole purpose of increasing the understanding of the claims and thus they shall not be deemed limiting the scope of the element identified by such reference signs by way of example.

## Claims

1. Method for automatically feeding elements of elongated shape, comprising the steps of:
(a). prearranging a transfer device (10) at a store (3) in which said elements (2) of elongated shape to be fed are placed, said transfer device (10) shaping a transfer plane (12) on which said elements (2) can be supported;
(b). picking by a picking unit (4) a plurality of said elements (2) from said store (3);
(c). arranging said plurality of elements (2), previously picked, in support on said transfer plane (12) which is prearranged in a substantially horizontal position for supporting a plurality of said elements (2);
(d). operating, in a relative motion with respect to said supported plurality of said elements (2), a counting member (14) associated with said transfer plane (12) along a substantially transverse direction with respect to said supported elements (2), performing in a counting stroke the counting of at least a determined number of said elements (2),
the method being **characterized in that** it further comprises the steps of:
(e). handling a transfer member (15) prearranged in a disengagement position in said direction transverse to said supported elements (2);
(f). stopping said transfer member (15) and operating said transfer member (15) in an engagement position of said elements (2), at said determined number of counted elements (2);
(g). handling said transfer member (15) operated in a transfer back stroke along said transverse direction, thus transferring said determined number of elements (2) along said transfer plane (12) of said transfer device (10).

2. Method according to claim 1, **characterized in that** said step of (d). operating, in a relative motion with respect to said supported plurality of said elements (2), said counting member (14), provides to handle said counting member (14) along said transverse direction, said elements (2) staying supported on said transfer plane (12).

3. Method according to claim 2, **characterized in that** said step of (f). operating said transfer member (15) comprises the further step of
inserting said transfer member (15) between said elements (2), separating said determined number from a remaining number of said counted elements (2), said step of (g). handling said transfer member (15) along said transverse direction, causing the movement of said determined number of said elements (2), moving away from said remaining number.

4. Method according to claim 3, **characterized in that** said step of inserting said transfer member (15) between said elements (2) is preceded by the further steps of:
operating the overtaking of said determined number of elements (2) along said counting stroke by said mobile counting member (14) and said transfer member (15);
detecting by said counting member (14) said overtaking, due to the presence of at least a couple of said approached elements (2), said counting member (14) processing a comparison between an instant measurement of the path completed in said transverse direction with a figure relative to the transverse size of said elements (2);
calculating the amount of said overtaking;
handling said transfer member (15) in a back stroke corresponding to said calculated total, to place said transfer member (15) at a position, along said transfer plane (12), of separation of said determined number of elements (2) from said remaining number of said elements (2).

5. Method according to one of the previous claims, **characterized in that** said step of (g). handling said operated transfer member (15), along said transverse direction, comprises the further step of:
(h) counting said elements (2) being discharged from said transfer plane (12) by an auxiliary counting member (18) arranged in a fixed way at one end of said transfer plane (12).

6. Method according to one of the previous claims, **characterized in that** said step of (c). arranging in support said picked plurality of elements (2) on said transfer plane (12) comprises the further step of:
laying in a row or layer said elements (2) on said transfer plane (12), by exerting through said picking means (4) a compression action along a direction perpendicular to said support plane (12).

7. Apparatus for automatically feeding elements of elongated shape, comprising a picking unit (4) predisposed to pick a plurality of said elements (2) from a collecting store (3), and to transfer said plurality of picked elements (2); a transfer device (10) shaping a transfer body (11) predisposed to receive said plurality of elements (2) from said picking unit (4), said transfer device (10) shaping a transfer plane (12) for supporting said elements (2); a counting member (14) associated with said transfer device (10), mobile along a direction transverse with respect to the longitudinal length of said elements (2), in order to count, in a counting stroke in a relative motion with respect to said elements (2) to be fed, at least a determined number of said supported elements (2), **characterized in that** it comprises a transfer member (15) mobile along said transverse direction, operable from a disengagement position at which it does not interfere with said elements (2) supported by said transfer plane (12) to an engagement position for transferring said determined number of said elements (2), counted by said counting member (14), on said transfer plane (12).

8. Apparatus according to claim 7, **characterized in that** said counting member (14) is carried in mobile manner by a carriage (16) slidable in said transverse direction along guides (17) that extend for a useful extension, of support, of said transfer device (10).

9. Apparatus according to claim 8, **characterized in that** said transfer body (11) shapes a support shelf for said elements (2) to be fed and said carriage (16) is sliding on a plane underneath said transfer plane (12).

10. Apparatus according to claim 9, **characterized in that** said counting member (14) detects the presence of said elements (2) on said transfer plane (2) through a counting stroke along said transverse direction, as well as a measure of the completed distance, instantly.

11. Apparatus according to claim 7, **characterized in that** said transfer plane (12) is operable, being mobile between an active support position, substantially horizontal in use, and an inactive position, spaced from said active position.

12. Apparatus according to claim 11, **characterized in that** it comprises an additional transfer member (20), operable alternately to said transfer body (11), when said transfer body (11) is placed in said inactive position.

13. Apparatus according to claim 12, **characterized in that** said additional transfer member (20) is a screw member, rotatable about its longitudinal axis, parallel to said transfer direction, to transfer said elements (2) along said transfer direction.

14. Apparatus according to one of the previous claims, **characterized in that** said transfer device (10) cooperates with said picking unit (4), said picking unit (4) comprising a respective abutment portion mobile along a direction perpendicular to said transfer plane (12), to level in a row or transverse layer said elements (2) received in support on said transfer plane (12).

## Patentansprüche

1. Verfahren zum automatischen Zuführen von Elementen länglicher Form, das die folgenden Schritte umfasst:
(a). Voranordnen einer Transfervorrichtung (10) an einem Lager (3), in dem die zuzuführenden Elemente (2) länglicher Form platziert sind, wobei die Transfervorrichtung (10) eine Transferebene (12) formt, auf der die Elemente (2) gestützt werden können;
(b). Aufnehmen einer Vielzahl der Elemente (2) durch eine Aufnahmeeinheit (4) aus dem Lager (3);
(c). Anordnen der zuvor aufgenommenen Vielzahl von Elementen (2) gestützt auf der Transferebene (12), die zuvor zum Stützen einer Vielzahl der Elemente (2) in einer im Wesentlichen horizontalen Position angeordnet wurde;
(d). Betreiben einer Zählkomponente (14), die mit der Transferebene (12) verknüpft ist, in einer relativen Bewegung mit Bezug auf die gestützte Vielzahl der Elemente (2) entlang einer im Wesentlichen Querrichtung mit Bezug auf die gestützten Elemente (2), um in einem Zählhub die Zählung mindestens einer bestimmten Anzahl der Elemente (2) durchzuführen,
wobei das Verfahren **dadurch gekennzeichnet ist, dass** es ferner die folgenden Schritte umfasst:
(e). Befördern einer Transferkomponente (15), die vorab in einer Ausrückposition angeordnet wurde, in die Richtung quer zu den gestützten Elementen (2);
(f). Stoppen der Transferkomponente (15) und Betreiben der Transferkomponente (15) in einer Einrückposition der Elemente (2) an der bestimmten Anzahl von gezählten Elementen (2);
(g). Befördern der Transferkomponente (15), die in einem Transferrückhub betrieben wird, entlang der Querrichtung, wodurch die bestimmte Anzahl von Elementen (2) entlang der Transferebene (12) der Transfervorrichtung (10) transferiert werden.

2. Verfahren nach Anspruch 1, **dadurch gekennzeichnet, dass** der Schritt des (d). Betreibens der Zählkomponente (14) in einer relativen Bewegung mit Bezug auf die gestützte Vielzahl von Elementen (2) das Befördern der Zählkomponente (14) entlang der Querrichtung bereitstellt, wobei die Elemente (2) auf der Transferebene (12) gestützt bleiben.

3. Verfahren nach Anspruch 2, **dadurch gekennzeichnet, dass** der Schritt des (f). Betreibens der Transferkomponente (15) den folgenden weiteren Schritt umfasst
Einfügen der Transferkomponente (15) zwischen die Elemente (2), wodurch die bestimmte Anzahl von einer verbleibenden Anzahl der gezählten Elemente (2) getrennt wird, den Schritt des (g). Beförderns der Transferkomponente (15) entlang der Querrichtung, wodurch die Bewegung der bestimmten Anzahl der Elemente (2) bewirkt wird, die sich von der verbleibenden Anzahl weg bewegen.

4. Verfahren nach Anspruch 3, **dadurch gekennzeichnet, dass** dem Schritt des Einfügens der Transferkomponente (15) zwischen die Elemente (2) die folgenden weiteren Schritte vorausgehen:
Betreiben des Übernehmens der bestimmten Anzahl von Elementen (2) entlang des Zählhubs durch die Zählkomponente (14) und die Transferkomponente (15);
Detektieren des Übernehmens durch die Zählkomponente (14) aufgrund des Vorhandenseins von mindestens einigen der angenäherten Elemente (2), wobei die Zählkomponente (14) einen Vergleich zwischen einer sofortigen Messung des Pfades, der in die Querrichtung zurückgelegt wurde, mit einer Figur die sich auf die Quergröße der Elemente (2) bezieht, verarbeitet;
Berechnen der Menge des Übernehmens;
Befördern der Transferkomponente (15) in einem Rückhub, der der berechneten Gesamtzahl entspricht, um die Transferkomponente (15) entlang der Transferebene (12) in einer Position der Trennung der bestimmten Anzahl von Elementen (2) von der verbleibenden Anzahl der Elemente (2) zu platzieren.

5. Verfahren nach einem der vorhergehenden Ansprüche, **dadurch gekennzeichnet, dass** der Schritt des (g). Beförderns der betriebenen Transferkomponente (15) entlang der Querrichtung den folgenden weiteren Schritt umfasst:
(h) Zählen der Elemente (2) die durch eine Zusatzzählkomponente (18), die auf eine feste Weise an einem Ende der Transferebene (12) angeordnet ist, von der Transferebene (12) ausgegeben werden.

6. Verfahren nach einem der vorhergehenden Ansprüche, **dadurch gekennzeichnet, dass** der Schritt des (c). gestützten Anordnens der aufgenommenen Vielzahl von Elementen (2) auf der Transferebene (12) den folgenden weiteren Schritt umfasst:
Legen der Elemente (2) in einer Reihe oder Schicht auf die Transferebene (12) durch Ausüben einer Komprimierungsaktion durch das Aufnahmemittel (4) entlang einer Richtung senkrecht zur Stützebene (12).

7. Einrichtung zum automatischen Zuführen von Elementen länglicher Form, die eine Aufnahmeeinheit (4), die prädisponiert ist, eine Vielzahl der Elemente (2) aus einem Sammellager (3) aufzunehmen und die Vielzahl von aufgenommenen Elementen (2) zu transferieren; eine Transfervorrichtung (10), die einen Transferkörper (11) formt, der prädisponiert ist, die Vielzahl von Elementen (2) von der Aufnahmeeinheit (4) zu empfangen, wobei die Transfervorrichtung (10) eine Transferebene (12) zum Stützen der Elemente (2) formt; eine Zählkomponente (14), die mit der Transfervorrichtung (10) verknüpft und mit Bezug auf die Längslänge der Elemente (2) entlang einer Querrichtung mobil ist, um in einem Zählhub in einer relativen Bewegung mit Bezug auf die zuzuführenden Elemente (2) mindestens eine bestimmte Anzahl der gestützten Elemente (2) zu zählen, umfasst, **dadurch gekennzeichnet, dass** sie eine Transferkomponente (15) umfasst, die entlang der Querrichtung mobil und von einer Ausrückposition, in der sie die Elemente (2) die von der Transferebene (12) gestützt werden, nicht beeinträchtigt, in eine Einrückposition zum Transferieren der bestimmten Anzahl der Elemente (2), die von der Zählkomponente (14) gezählt wurden, auf der Transferebene (12) betreibbar ist.

8. Einrichtung nach Anspruch 7, **dadurch gekennzeichnet, dass** die Zählkomponente (14) in einer mobilen Weise von einem Wagen (16) getragen wird, der entlang Führungen (17), die sich über eine nützliche Erstreckung der Stützung der Transfervorrichtung (10) erstrecken, in die Querrichtung gleitbar ist.

9. Einrichtung nach Anspruch 8, **dadurch gekennzeichnet, dass** der Transferkörper (11) ein Stützregal für die zuzuführenden Elemente (2) formt und der Wagen (16) auf einer Ebene unter der Transferebene (12) gleitet.

10. Einrichtung nach Anspruch 9, **dadurch gekennzeichnet, dass** die Zählkomponente (14) das Vorhandensein der Elemente (2) auf der Transferebene (12) durch einen Zählhub entlang der Querrichtung sowie ein Maß der zurückgelegten Strecke sofort detektiert.

11. Einrichtung nach Anspruch 7, **dadurch gekennzeichnet, dass** die Transferebene (12) zwischen einer aktiven Stützposition, im Gebrauch im Wesentlichen horizontal, und einer inaktiven Position, die von der aktiven Position beabstandet ist, mobil betreibbar ist.

12. Einrichtung nach Anspruch 11, **dadurch gekennzeichnet, dass** sie eine zusätzliche Transferkomponente (20) umfasst, die abwechselnd zum Transferkörper (11) betreibbar ist, wenn der Transferkörper (11) in der inaktiven Position platziert ist.

13. Einrichtung nach Anspruch 12, **dadurch gekennzeichnet, dass** die zusätzliche Transferkomponente (20) eine Schraubenkomponente ist, die parallel zur Transferrichtung um ihre Längsachse drehbar ist, um die Elemente (2) entlang der Transferrichtung zu transferieren.

14. Einrichtung nach einem der vorhergehenden Ansprüche, **dadurch gekennzeichnet, dass** die Transfervorrichtung (10) mit der Aufnahmeeinheit (4) zusammenwirkt, wobei die Aufnahmeeinheit (4) einen jeweiligen Anschlagabschnitt umfasst, der entlang einer Richtung senkrecht zur Transferebene (12) mobil ist, um eine Reihe oder eine Querschicht der Elemente (2) die gestützt auf der Transferebene (12) empfangen wurden, zu nivellieren.

## Revendications

1. Méthode pour fournir automatique des éléments de forme allongée, comprenant les étapes de :
(a). pré-arrangement d'un dispositif de transfert (10) dans un récipient (3) où sont placés lesdits éléments (2) de forme allongée à fournir, ledit dispositif de transfert (10) formant un plan de transfert (12) sur lequel lesdits éléments (2) peuvent être appuyés ;
(b). prélèvement, par une unité de prélèvement (4), d'une pluralité desdits éléments (2) dudit récipient (3) ;
(c). arrangement de ladite pluralité d'éléments (2), préalablement prélevés, en appui sur ledit plan de transfert (12) qui est pré-arrangé dans une position substantiellement horizontale pour supporter une pluralité desdits éléments (2) ;
(d). actionnement, dans un mouvement relatif par rapport à ladite pluralité supportée desdits éléments (2), d'un organe de comptage (14) associé audit plan de transfert (12) le long d'une direction substantiellement transversale par rapport auxdits éléments (2) supportés, effectuant, dans une course de comptage, le comptage d'au moins un nombre déterminé desdits éléments (2),
la méthode étant **caractérisée en ce qu'**elle comprend en outre les étapes de :
(e). Manipulation d'un organe de transfert (15) pré-arrangé dans une position de désengagement dans ladite direction transversale auxdits éléments supportés (2) ;
(f). arrête dudit organe de transfert (15) et actionnement dudit organe de transfert (15) dans une position d'engagement desdits éléments (2), en correspondance dudit nombre déterminé d'éléments (2) comptés ;
(g). manipulation dudit organe de transfert (15) actionné dans une course en arrière de transfert le long de la direction transversale, transférant ainsi ledit nombre déterminé d'éléments (2) le long dudit plan de transfert (12) dudit dispositif de transfert (10).

2. Méthode selon la revendication 1, **caractérisée par le fait que** ladite étape de (d). actionnement, dans un mouvement relatif par rapport à ladite pluralité supportée desdits éléments (2), dudit élément de comptage (14), permet de manipuler ledit élément de comptage (14) le long de ladite direction transversale, lesdits éléments (2) restant en appui sur ledit plan de transfert (12).

3. Méthode selon la revendication 2, **caractérisée par le fait que** ladite étape de (f). actionnement dudit organe de transfert (15) comprend l'étape supplémentaire de
insertion dudit organe de transfert (15) entre lesdits éléments (2), séparation dudit nombre déterminé d'un nombre restant desdits éléments (2) comptés, ladite étape de (g). manipulation dudit organe de transfert (15) le long de ladite direction transversale, provoquant le déplacement dudit nombre déterminé desdits éléments (2), s'éloignant dudit nombre restant.

4. Méthode selon la revendication 3, **caractérisée par le fait que** ladite étape d'insertion dudit organe de transfert (15) entre lesdits éléments (2) est précédée par les étapes supplémentaires de :
actionnement du dépassement dudit nombre déterminé d'éléments (2) le long de ladite course de comptage par ledit organe de comptage (14) mobile et ledit organe de transfert (15) ;
détection par ledit organe de comptage (14) dudit dépassement, en raison de la présence d'au moins un couple desdits éléments (2) approchés, ledit élément de comptage (14) élaborant une comparaison entre le mesurage instantané du trajet complété dans ladite direction transversale avec un nombre relatif à la dimension transversale desdits éléments (2) ;
calcul de la quantité dudit dépassement ;
manipulation dudit organe de transfert (15) dans une course en arrière correspondant audit total calculé, afin de placer ledit organe de transfert (15) en correspondance d'une position, le long dudit plan de transfert (12), de séparation dudit nombre déterminé d'éléments (2) dudit nombre restant desdits éléments (2).

5. Méthode selon l'une des revendications précédentes, **caractérisée par le fait que** ladite étape de (g). manipulation dudit organe de transfert (15) actionné, le long de ladite direction transversale, comprend l'étape supplémentaire de :
(h) compte desdits éléments (2) déchargés dudit plan de transfert (12) par un organe de comptage (18) auxiliaire disposé de manière fixe en correspondance d'une extrémité dudit plan de transfert (12).

6. Méthode selon l'une des revendications précédentes, **caractérisée par le fait que** ladite étape de (c). arrangement en appuie de ladite pluralité d'éléments (2) sur ledit plan de transfert (12) comprend l'étape supplémentaire de :
déposition en rangée ou en couche desdits éléments (2) sur ledit plan de transfert (12), en exerçant à travers dudit moyen de prélèvement (4) une action de compression le long d'une direction perpendiculaire audit plan de support (12).

7. Appareil pour fournir automatiquement des éléments de forme allongée, comprenant une unité de prélèvement (4) prédisposée pour prélever une pluralité desdits éléments (2) dans un récipient de collecte (3) et pour transférer ladite pluralité d'éléments (2) prélevés ; un dispositif de transfert (10) formant un corps de transfert (11) prédisposé pour recevoir ladite pluralité d'éléments (2) de ladite unité de prélèvement (4), ledit dispositif de transfert (10) formant un plan de transfert (12) pour supporter lesdits éléments (2) ; un élément de comptage (14) associé audit dispositif de transfert (10), mobile le long d'une direction transversale par rapport à la longueur longitudinale desdits éléments (2), afin de compter, dans une course de comptage dans un mouvement relatif par rapport audits éléments (2) à alimenter, au moins un nombre déterminé desdits éléments (2) supportés, **caractérisé par le fait qu'**il comprend un organe de transfert (15) mobile le long de ladite direction transversale, pouvant être actionné à partir d'une position de désengagement dans laquelle il n'interfère pas avec lesdits éléments (2) supportés par ledit plan de transfert (12) vers une position d'engagement pour transférer ledit nombre déterminé desdits éléments (2), comptés par ledit élément de comptage (14), sur ledit plan de transfert (12).

8. Appareil selon la revendication 7, **caractérisé par le fait que** ledit organe de comptage (14) est porté de manière mobile par un chariot (16) pouvant coulisser dans ladite direction transversale le long de guides (17) qui s'étendent pour une extension utile de support dudit dispositif de transfert (10).

9. Appareil selon la revendication 8, **caractérisé par le fait que** ledit corps de transfert (11) forme une étagère de support pour lesdits éléments (2) à alimenter et ledit chariot (16) coulisse sur un plan situé au-dessous dudit plan de transfert (12).

10. Appareil selon la revendication 9, **caractérisé par le fait que** ledit organe de comptage (14) détecte immédiatement la présence desdits éléments (2) sur ledit plan de transfert (2) à travers d'une course de comptage le long de ladite direction transversale, ainsi qu'un mesurage de la distance complétée.

11. Appareil selon la revendication 7, **caractérisé en ce que** ledit plan de transfert (12) est actionnable de manière mobile entre une position de support actif, substantiellement horizontale lors de l'utilisation, et une position inactive, espacée de ladite position active.

12. Appareil selon la revendication 11, **caractérisé par le fait qu'**il comprend un organe de transfert (20) supplémentaire, pouvant être actionné alternativement avec ledit corps de transfert (11), lorsque ledit corps de transfert (11) est placé dans ladite position inactive.

13. Appareil selon la revendication 12, **caractérisé par le fait que** ledit organe de transfert (20) supplémentaire est un organe à vis pouvant tourner autour de son axe longitudinal, parallèlement à ladite direction de transfert, pour transférer lesdits éléments (2) le long de ladite direction de transfert.

14. Appareil selon l'une des revendications précédentes, **caractérisé par le fait que** ledit dispositif de transfert (10) coopère avec ladite unité de prélèvement (4), ladite unité de prélèvement (4) comprenant une respective portion de butée mobile le long d'une direction perpendiculaire audit plan de transfert (12), pour niveler en rangée ou en couche transversale lesdits éléments (2) reçus en appui sur ledit plan de transfert (12).
